# EUROPÄISCHE PATENTSCHRIFT

(11) **EP 1 494 786 B1**
(45) Veröffentlichungstag und Bekanntmachung des Hinweises auf die Patenterteilung: **17.09.2008**
(21) Anmeldenummer: 03746238.9
(22) Anmeldetag: 14.04.2003
(51) Int. Cl.: B01D 53/22

(54) **VERFAHREN UND EINRICHTUNG ZUR ERZEUGUNG EINER KÜNSTLICHEN ATMOSPHÄRE IN EINEM LAGER- ODER TRANSPORTBEHÄLTER**
METHOD AND DEVICE FOR CREATING AN ARTIFICIAL ATMOSPHERE IN A STORAGE OR TRANSPORT CONTAINER
PROCEDE ET DISPOSITIF DE PRODUCTION D'UNE ATMOSPHERE ARTIFICIELLE AU SEIN D'UN RECEPTACLE DE STOCKAGE OU DE TRANSPORT

(30) Priorität: 15.04.2002 DE 10216518
(43) Veröffentlichungstag der Anmeldung: 12.01.2005
(73) Patentinhaber: Cargofresh AG, 22926 Ahrensburg (DE)
(72) Erfinder: SAUL, Heinrich, 22397 Hamburg (DE)
(74) Vertreter: Meyer, Ludgerus
(86) Internationale Anmeldenummer: PCT/DE2003/001248
(87) Internationale Veröffentlichungsnummer: WO 2003/086874

(56) Entgegenhaltungen:
- EP-A- 0 323 431
- EP-A- 0 467 668
- EP-A- 0 888 804
- US-A- 4 829 774
- US-A- 5 034 025

## Beschreibung

Die Erfindung betrifft ein Verfahren zur Erzeugung einer künstlichen Atmosphäre in einem Lager- oder Transportbehälter nach dem Oberbegriff des Anspruchs 1. Die Erfindung betrifft ferner eine Einrichtung zur Durchführung eines derartigen Verfahrens nach dem Oberbegriff des Anspruchs 8.

Es ist seit längerer Zeit bekannt, in Transport- oder Lagerbehältern die Qualität von verderblichen Waren über einen langen Zeitraum dadurch zu erhöhen, dass die Ware einer künstlichen Atmosphäre ausgesetzt ist, deren Stickstoffgehalt bis zu 99% beträgt. Unter derartigen Bedingungen wird die Ware quasi in einen Tiefschlaf versetzt und unterliegt während dieser Zeit keiner Fäulnisbildung und Nachreife. Unter solchen Bedingungen können daher Waren über längere Zeiträume und Strecken transportiert werden, die anderenfalls innerhalb von wenigen Tagen verdorben wären.

Aus der EP 357 949 B1 ist eine Vorrichtung zur Erzeugung einer künstlichen Atmosphäre in einem Transportbehälter bekannt, bei der Stickstoff mittels eines Stickstofferzeugeraggregats aus der Umgebungsluft gewonnen wird und kontinuierlich in den Transportbehälter überführt wird. Die Erzeugung der hohen Stickstoffkonzentration erfolgt dabei mittels einer Einrichtung zur Trennung der wesentlichen Gasbestandteile der Umgebungsluft, nämlich Stickstoff und Sauerstoff in einem Teil, der etwa 99% Stickstoff enthält, und einen Teil, der im wesentlichen Sauerstoff (Permeat) aufweist.

Mit derartigen Gastrennmembranen kann ein kontinuierlicher Gasstrom erzeugt werden. Es sind auch Einrichtungen zur diskontinuierlichen Stickstofferzeugung bekannt, insbesondere Molekularsiebe, deren apparatetechnischer Aufbau jedoch aufgrund des Erfordernisses einer Rückspülung des Molekularsiebs erheblich höher ist. Daher haben sich für die Zwecke der Erzeugung einer künstlichen Atmosphäre im wesentlich Gastrennmembranen durchgesetzt.

Aus der EP 224 469 ist ein transportabler Kühlcontainer bekannt, bei dem zusätzlich zur Erzeugung eines erhöhten Stickstoffanteils im Transportbehälter eine Befeuchtung der künstlichen Atmosphäre durchgeführt wird. Damit lässt sich abhängig von der zu transportierenden Ware ein optimaler Feuchtegrad im Transportbehälter einstellen. Eine derartige Anlage erfordert, dass ein Wasserbehälter mitzuführen ist, der ständig auf Verkeimung zu prüfen ist, und von Zeit zu Zeit zu desinfizieren ist.

Gastrennmembranen reagieren allgemein empfindlich auf Feuchtigkeit. Die Beaufschlagung mit feuchter Druckluft wirkt sich negativ auf ihre Lebensdauer aus. Zu ihrem Schutz werden Gastrennmembranen daher häufig über geeignete Einrichtungen, wie z. B. Zyklonabscheider, die das ungebundene Wasser abscheiden, geschützt.

Bei bisher bekannten Gastrennmembranen findet eine zwangsläufige Entfeuchtung der zugeführten Druckluft während der Gastrennung statt. Der abgeschiedene Wasserdampf wird zusammen mit dem Permeat abgeführt. Diese Abscheidung von Wasserdampf beeinträchtigt jedoch die Leistung der Stickstoffproduktion.

Es ist auch bekannt geworden, der Gastrennmembrane ein energieverbrauchendes Heizgerät vorzuschalten, um die Temperatur der zugeführten Druckluft anzuheben und damit die relative Luftfeuchtigkeit zu senken, um so die Gastrennmembrane vor ihrer Beaufschlagung mit ungebundenem Wasser zu schützen.

Neben der Vorschaltung von Heizgeräten ist es auch bekannt, die Druckluft durch vorgeschalteter Absorptionstrockner zu entfeuchten. Diese verbrauchen jedoch einen Teil der zugeführten Druckluft und verringern damit die Druckluftzufuhr zur Gastrennmembran. Damit wird jedoch auch der Wirkungsgrad der Stickstoffproduktion verringert.

Der Erfindung liegt die Aufgabe zugrunde, ein Verfahren und eine Einrichtung zur Erzeugung einer künstlichen Atmosphäre in einem Lager- oder Transportbehälter anzugeben, bei dem bei hohem Wirkungsgrad der Anlage eine Feuchteinstellung im Transport- oder Lagerbehälter möglich ist, ohne dass ein zusätzlicher Flüssigkeitsvorrat erforderlich ist.

Diese Aufgabe wird durch das im Anspruch 1 angegebene Verfahren gelöst. Eine erfindungsgemäße Einrichtung ist im Anspruch 8 angegeben.

Die Erfindung geht aus von einem Verfahren zur Erzeugung einer künstlichen Atmosphäre in einem Lager- oder Transportbehälter, bei dem von einem Luftverdichter zugeführte Druckluft über eine Gastrennmembran in den Lager- oder Transportbehälter zur Erzeugung einer künstlichen Atmosphäre mit erhöhtem Stickstoffanteil überführt wird, wobei der Feuchtegehalt der zugeführten Druckluft mittels einer Entfeuchtungseinrichtung verringert wird.

Erfindungsgemäß wird die der Gastrennmembran zugeführte Druckluft vor ihrem Eintritt in die Gastrennmembran mittels einer Entfeuchtungsmembran entfeuchtet.

Der erfindungsgemäße Einsatz einer Entfeuchtungsmembran senkt die Feuchtigkeit der Druckluft und erhöht damit die Stickstoffproduktion. Durch die verringerte Feuchte der der Gastrennmembran zugeführten Druckluft lässt sich deren Lebensdauer und Wirkungsgrad erhöhen.

Zur Einstellung der künstlichen Atmosphäre im Lager- oder Transportbehälter auf einen gewünschten Feuchtegrad wird vorzugsweise die aus der Druckluft in der Entfeuchtungsmembran ausgeschiedene Feuchte gesteuert in den Lager- oder Transportbehälter eingeführt.

Dies hat den Vorteil, dass die im Lager- oder Transportbehälter erforderliche Feuchte aus der Entfeuchtungsmembran gewonnen werden kann, ohne dass gesonderte Flüssigkeitsbehälter erforderlich sind. Einerseits verringert sich dadurch der apparatemäßige Aufwand, andererseits der logistische Aufwand, der erforderlich ist, um während eines länger dauernden Transports den anderweitig erforderlichen Flüssigkeitsspeicher gefüllt zu halten.

Die in den Lager- oder Transportbehälter zu überführende Feuchte kann dem Behälter unmittelbar zugeführt werden, sie kann jedoch auch dem die Gastrennmembran verlassenden Gasstrom hinzugefügt werden.

In einer ersten bevorzugten Ausführungsform der Erfindung wird über einen Abzweig ein Teil des die Gastrennmembran verlassenden Gasstroms über die Rückspülstrecke der Entfeuchtungsmembran geführt, bevor der Gasstrom dem Lager- oder Transportbehälter zugeführt wird. Damit wird Stickstoff als Spülluft für die Entfeuchtungsmembran eingesetzt und gemeinsam mit dem von der Entfeuchtungsmembran abgetrennten Wasserdampf der Atmosphäre des Transport- oder Lagerbehälters zugeführt.

Durch eine geeignete Ventilsteuerung kann der Anteil des Stickstoffstroms, der über die Entfeuchtungsmembran geführt wird, eingestellt werden, um damit den Feuchtegehalt der dem Behälter zugeführten künstlichen Atmosphäre nach Bedarf einzustellen.

In einer alternativen Ausführungsform kann vorgesehen sein, dass das die Gastrennmembran verlassende Permeat wenigstens zum Teil über die Rückspülstrecke der Entfeuchtungsmembran geführt wird und erst dann an die Umgebungsatmosphäre abgegeben wird. Durch diese Maßnahme findet im Gegensatz zum Absorptionstrockner kein Druckluftverbrauch statt und die Stickstoffproduktion der Gastrennmembran erhöht sich entsprechend.

Es kann auch vorgesehen sein, die zuvor genannten Alternativen abwechselnd durch eine geeignete Ventilsteuerung einzuschalten. Insbesondere in der Initialisierungsphase eines Transport- oder Lagerbehälters lässt sich damit die Zeit zur Einstellung der künstlichen Atmosphäre auf den gewünschten Zustand beträchtlich verringern.

In einer weitergehenden Ausführungsform kann auch vorgesehen sein, dass eine Kühlung der der Entfeuchtungsmembran zugeführten Druckluft erfolgt. Durch diese Kühlung wird die Membran vor einem Zyklonabscheider und einer anschließenden Erwärmung vor einer Beaufschlagung mit freiem Wasser und den damit verbundenen negativen Folgen geschützt.

Die erfindungsgemäße Einrichtung zur Durchführung des genannten Verfahrens enthält die Hintereinanderschaltung eines Luftverdichters, einer Entfeuchtungsmembran und einer Gastrennmembran. Die Entfeuchtungsmembran enthält vorzugsweise eine Rückspülstrecke, über die entweder wenigstens ein Teil des aus der Gastrennmembran abgetrennten Permeats oder wenigstens ein Teil des aus der Gastrennmembran austretenden Stickstoffs geführt wird.

Bei einer Ausführungsform, bei der das Permeat durch die Rückspülstrecke der Entfeuchtungsmembran geführt wird, wird das Permeat anschließend an die Atmosphäre abgegeben. Bei der alternativen Ausführungsform wird wenigstens ein Teil des aus der Gastrennmembran austretenden Stickstoffs über die Rückspülstrecke der Entfeuchtungsmembran und dann zurück in den Transport- oder Lagerbehälter überführt. Die Erfindung kann eine Ventilsteuerung enthalten, durch die alternativ eine Spülung der Entfeuchtungsmembran mit Permeat oder mit Stickstoff durchgeführt werden kann. Bei einer Spülung der Rückspülstrecke der Entfeuchtungsmembran mit Stickstoff kann zwischen Ein- und Auslaß der Rückspülstrecke ein Regelventil geschaltet sein, mit dessen Hilfe die Größe des durch die Rückspülstrecke der Entfeuchtungsmembran geführten Teilstroms einstellbar ist.

Zwischen Drucklufterzeuger und Entfeuchtungsmembran kann ein Kühlaggregat eingeschaltet sein, um durch Temperaturabsenkung überschüssiges Wasser leichter entfernen zu können.

Die Erfindung wird nachstehend anhand eines Ausführungsbeispiels näher erläutert. Es zeigen
- Fig. 1: eine Prinzipdarstellung der Erfindung nach einer ersten Ausführungsform,
- Fig. 2: eine Prinzipdarstellung der Erfindung gemäß Fig. 1 mit geänderter Ventilstellung, und
- Fig.3: eine Prinzipdarstellung einer vereinfachten Ausführungsform der Erfindung.

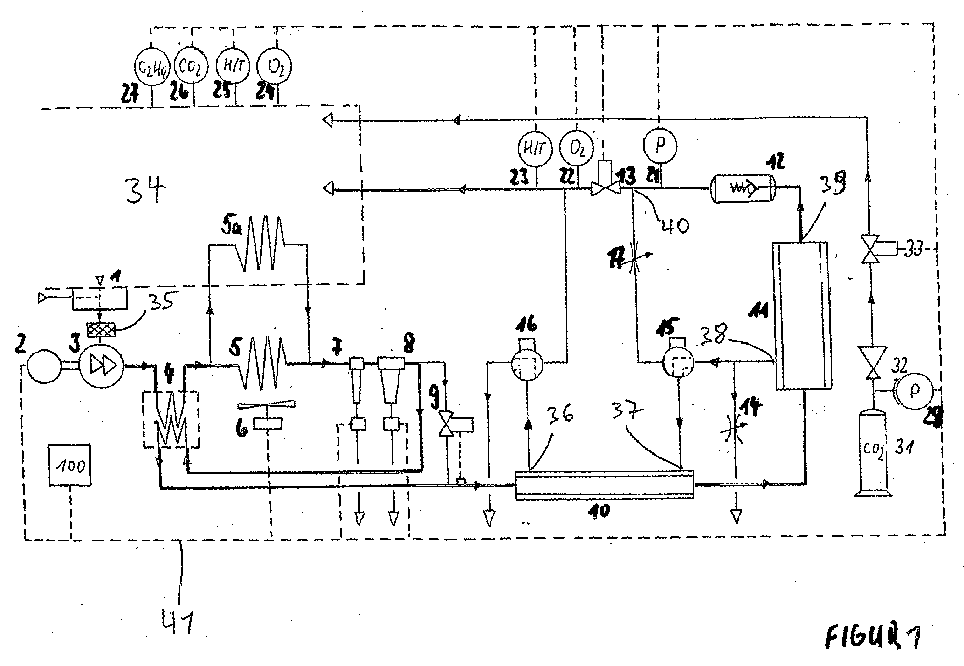

In Fig. 1 ist eine Einrichtung zur Herstellung einer künstlichen Atmosphäre in einem Transportbehälter 34 dargestellt. Der Behälter 34 kann ein stationärer Lagerraum sein, er kann jedoch auch ein transportabler Behälter (z. B. Container) sein, wie er im Luftverkehr, auf Seeschiffen, als Straßentransportfahrzeug oder als schienengebundenes Fahrzeug Verwendung findet. Solche Behälter sind in der Regel temperaturisoliert und im wesentlichen hermetisch abgeschlossen. Wenn sie als Lebensmitteltransport- oder Lagerbehälter verwendet werden, ist ihnen häufig eine Kühlanlage zugeordnet, um die Temperatur im Inneren des Behälters abzusenken.

Beim erfindungsgemäßen Verfahren wird die in den Behälter zu überführende Atmosphäre im wesentlichen aus der Umgebungsluft erzeugt. Dazu wird mit einem von einem Antrieb 2 angetriebenen Kompressor 3 Umgebungsluft angesaugt. Optional kann auch eine steuerbare Ansaugeinrichtung 1 im Behälter mit nachgeschaltetem Filter 35 vorgesehen sein, um eine anteilige Luftmenge aus dem Behälter zu verwenden. Diese anteilige Luftmenge kann mit der Umgebungsluft gemischt dem Kompressor 3 zugeführt werden. Insbesondere in der Anfangsphase der Initialisierung eines Behälters kann damit die Zeitdauer zur Einstellung der Atmosphäre im Behälter 34 verkürzt werden.

Die im Kompressor verdichtete Luft wird nun einem Wärmetauscher 4 zugeführt, in dem die Temperatur der aus dem Kompressor austretenden Druckluft abgekühlt wird. Zur weiteren Absenkung der Drucklufttemperatur wird die Druckluft über einen Luftkühler 5 geführt, in dem die Druckluft über ein Kühlgebläse 6 zur Erzeugung eines gekühlten Druckluftstroms abgekühlt wird. Alternativ kann der Kühlluftstrom durch einen mit dem Antrieb des Kompressors oder dem Kompressor selbst gekoppelten Luftstromerzeuger erzeugt werden.

Bei Vorhandensein einer Kühlanlage im Behälter 34 kann auch ein Luftkühler 5a zur Absenkung der Temperatur der Druckluft verwendet werden. Dabei wird der Druckluftstrom durch den lüfterlosen Luftkühler im Behälter geführt.

Nach der Verdichtung auf beispielsweise 7,5 bar enthält die verdichtete Luft eine große Menge Wasser. Durch Kühlung der Luft kann die Speicherfähigkeit der Luft herabgesetzt werden, so dass freies Wasser entsteht, das in einem Zyklonabscheider abgeschieden werden kann.

Dem Kühler 5 folgt daher ein Wasserabscheider 7 zur Entwässerung der Druckluft von nicht gebundenem Wasser. Die Abfuhr des abgeschiedenen Wassers erfolgt nach dem Öffnen einer Entwässerungseinrichtung (z.B. mittels eines Magnetventils) durch den Druck der Druckluft.

Es folgt ein Druckluftfilter 8 zur Reinigung der Druckluft, insbesondere von Ölresten. Das dort abgeschiedene Wasser und/oder Öl kann ebenfalls elektrisch/elektronisch entfernt werden.

Die so gereinigte Druckluft wird im Gegenstrom durch den Wärmetauscher 4 geführt, wobei sie sich wieder etwas erwärmt, um in der nachfolgenden Entfeuchtungsmembran den Gehalt an freien Wasseranteilen gering zu halten.

Zur Regelung der Drucklufttemperatur vor Eintritt in die nachfolgenden Stufen kann ein Bypassventil 9 vorgesehen sein, das durch mehr oder weniger Öffnen und Schließen den Anteil der über den Wärmetauscher 4 zurückgeführten Druckluft steuert und so die der Entfeuchtungsmembran zugeführte Luft in der Temperatur einstellt.

Die Druckluft wird nun einer an sich bekannten Entfeuchtungsmembran (10) zur Entfeuchtung der Druckluft zugeführt. Die Entfeuchtungsmembrane weist einen Drucklufteinlass oder einen Druckluftauslass auf sowie eine Rückspülstrecke mit einem Einlass 37 und einem Auslass 36, aus der die abgetrennte Feuchtigkeit abgeführt werden kann.

Eine verwendbare Entfeuchtungsmembran ist durch einen mit Hohlfasern gefüllten Zylinder gebildet, bei dem die Wasserdampfmoleküle durch die Hohlfasern diffundieren und über die sogenannte Rückspülstrecke abgelassen werden können.

Der Druckluftauslass der Entfeuchtungsmembran führt auf den Eingang der Gastrennmembran 11, die ebenfalls in an sich bekannter Weise aufgebaut ist. Diese weist einen Einlass und zwei Auslässe auf. Die in den Einlass eingeführte Druckluft wird in der Gastrennmembran aufgeteilt in einen nahezu stauerstofffreien Stickstoffstrom (ca. 30% der eingesetzten Druckluft) und einen sauerstofffreichen Luftstrom (Permeat). Der Stickstoffgasstrorri wird über den Auslass 39 in den Behälter 34 überführt.

In der in Fig. 1 dargestellten Ausführungsform wird der aus dem Permeatauslass 38 der Gastrennmembran 11 ausgeschiedene Sauerstoff über ein Befeuchtungsventil 15, das als 3/2 Wege-Schaltventil elektrisch betätigbar ausgeführt ist, über die Rückspülstrecke der Entfeuchtungsmembran 10 sowie das Befeuchtungsventil 16, das ebenfalls als 3/2 Wege-Schaltventil elektrisch betätigbar ist, an die Umgebung abgeführt. Zur Einstellung des erforderlichen Durchflusses des Permeats durch die Entfeuchtungsstrecke der Entfeuchtungsmembran 10, ist ein Permeatventil 14, das als steuerbare Drossel ausgeführt ist, vorgesehen, das einen Teil des Permeats unmittelbar nach Austritt aus der Gastrennmembran 11 an die Umgebung abführt.

Der aus der Gastrennmembran 11 am Auslass 39 austretende Stickstoffstrom wird über einen optionalen Druckspeicher 12 mit eingebautem Rückschlagventil zur Speicherung von Stickstoff über ein elektrisch steuerbares Stickstoffregelventil 13 zum Behälter 34 geführt. Das Regelventil 13 dient der Einstellung des Stickstoffstroms bzw. der Stickstoffreinheit, indem die dadurch bewirkte Einstellung des Volumenstroms das Verhältnis zwischen Volumen des Stickstoffstroms und Volumen des Permeats einstellt. Das Regelventil 13 kann auch manuell bedient werden.

Die Verbindungsleitung zwischen Gastrennmembran 11 und Behälter 34 enthält einen Druckmesser 21 zur Überwachung des Anlagendrucks, einen Sauerstoffmesser 22 zur Überwachung der Stickstofferzeugung der Anlage sowie einen Feuchte-/Temperaturmesser 23 zur Überwachung der Feuchte des Stickstoffstroms zum Behälter 34. Entsprechende Sensoren 24 für Sauerstoff und 25 für Feuchte/Temperatur sind dem Behälter 34 unmittelbar zugeordnet, um die Atmosphärenbedingungen an der zu lagernden Ware zu bewachen. Ergänzend können CO₂-Sensoren 26 und C₂H₄-Sensoren 27 sowie weitere nicht dargestellte Sensoren für weitere Gase oder Zustände (z. B. Temperatur) dem Lagerraum zugeordnet sein.

Zum Transport oder zur Lagerung bestimmter Waren kann auch vorgesehen sein, dass zusätzlich eine CO₂ -Einspeisung in den Behälter 28 erfolgt, indem aus einer CO₂-Vorratsflasche 31 über ein Druckreduzierventil 32 zur Reduzierung des Speicherbehälterdrucks auf den am Druckmesser 28 gemessenen Betriebsdruck und ein steuerbares Absperrventil 33 ein gewünschter CO₂-Volumenstrom in den Behälter 34 überführt wird.

Sämtliche über Steuerleitungen 41 verbundene Sensoren, Ventile und Schaltelemente werden durch eine Anlagensteuerung 100 zum schnellen und effizienten Aufbau der künstlichen Atmosphäre im Behälter gesteuert und überwacht. Die erfassten Daten können aufgezeichnet werden oder über Datenfernübertragung an eine Steuerzentrale übermittelt werden, die ggf. über Datenrückübertragung eine Parameteränderung der einzustellenden Atmosphäre durchführen kann.

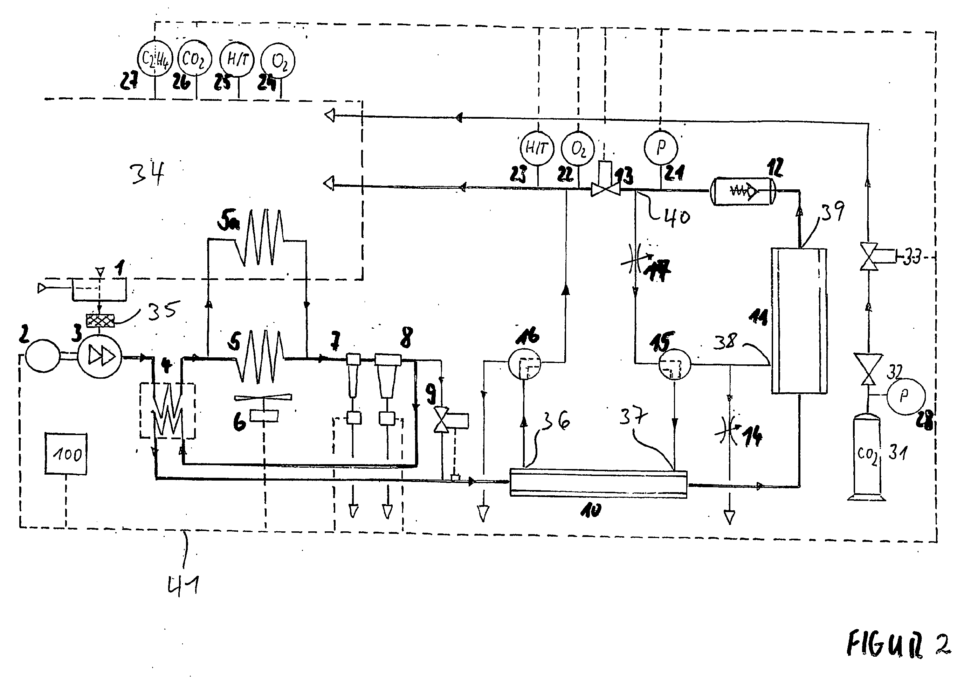

In der in Fig. 2 dargestellten Betriebsstellung der Einrichtung sind die Ventile 15 und 16 gegenüber der Schaltstellung von Fig. 1 umgeschaltet. Dadurch wird ein Teilstrom des aus der Gastrennmembran 11 aus dem Auslass 39 austretenden Stickstoffstroms vom Abzweig 40 über das als steuerbare Drossel ausgebildete Stickstoffventil 17 und das Befeuchtungsventil 15 über die Entfeuchtungsstrecke der Entfeuchtungsmembran 11 und zurück über das Befeuchtungsventil 16 geführt, so dass dieser Teilstrom wieder mit dem dem Behälter 34 zuzuführenden Stickstoffstrom vermischt wird.

In dieser Betriebsstellung wird der über die Entfeuchtsungsmembran geführte Teilstrom mit der darin abgetrennten Feuchte befeuchtet, so dass damit der Feuchtegrad im Behälter 34 einstellbar ist.

Das Stickstoffventil 17 dient der Einstellung des erforderlichen Stickstoffdurchflusses in Zusammenwirken mit dem Stickstoffregelventil 13. In der in Fig. 2 gezeigten Schaltstellung des Befeuchtungsventils 15 ist der Permeatzufluß zum Ventil 15 gesperrt, so dass das Permeat unmittelbar über das Permeatventil 14 an die Umgebung abgeführt wird.

Die Betriebsstellung der Ventile 15 und 16 kann zeitlich gesteuert eingestellt werden, je nach Erfordernis des Grads der gewünschten Befeuchtung des Behälters 34. Eine Vielzahl verschiedener Betriebsparameter lässt sich dadurch einstellen, dass die Betriebszeiten der Schaltstellungen der Ventile 15 und 16 eingestellt werden, dass das Stickstoffregelventil 13 geeignet und das Permeatventil 14 geeignet eingestellt werden, oder dass das Stickstoffventil 17 entsprechend den Anforderungen geregelt wird.

Mit Hilfe einer geeigneten programmierten Anlagensteuerung 100 können auch zeitliche Variationen der Betriebsparameter eingestellt werden, z. B. oszillierende Gasanteilwerte von Stickstoff, Sauerstoff oder CO₂ in der Atmosphäre des Behälters 34. Die Steuerung 100 kann auch verwendet werden, um die Temperatur im Behälter 34 zu steuern, indem das Kühlaggregat mit der Steuerung der Atmosphäre gekoppelt wird.

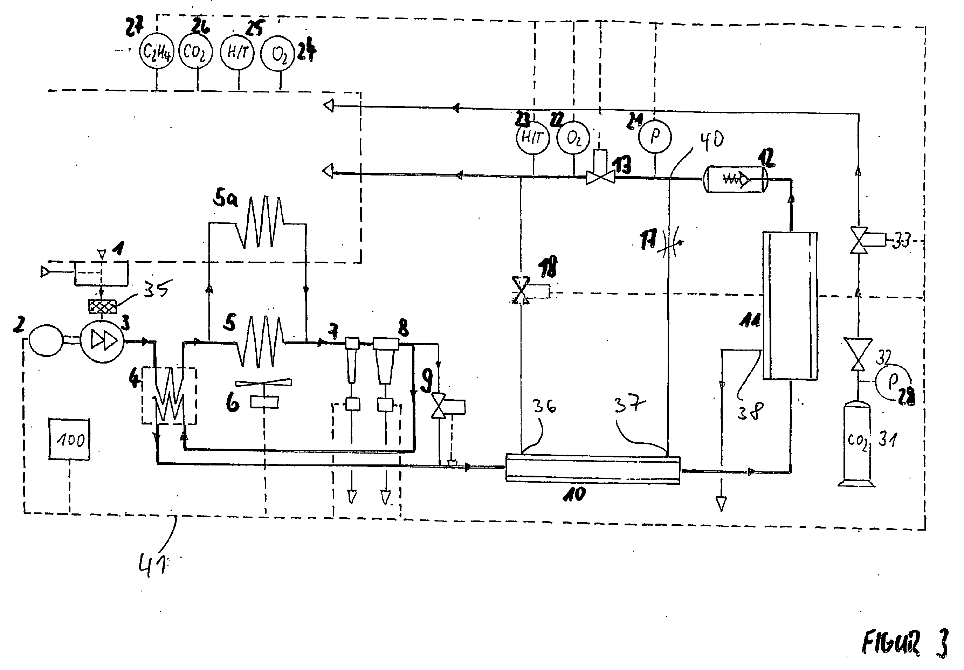

Fig. 3 zeigt eine vereinfachte Ausführungsform der Erfindung, in der auf die Befeuchtungsventile 15 und 16 verzichtet ist. In dieser Ausführungsform wird das die Gastrennmembran am Anschluss 38 verlassende Permeat unmittelbar an die Atmosphäre abgegeben. Mit einem elektrisch betätigbaren Stickstoffbypassventil 18 im die Entfeuchtungsstrecke der Entfeuchtungsmembran 10 durchfließenden Stickstoffteilstrom kann ein spezifischer Stickstoffdurchfluss und eine Einstellung des Befeuchtungsgrades der dem Behälter 34 zugeführten Atmosphäre erreicht werden.

Das erfindungsgemäße Verfahren und die erfindungsgemäße Einrichtung beschleunigen den Aufbau einer Stickstoffatmosphäre, verbessern die Stickstoffausbeute, verringern den Energieeinsatz und die Anlagenkosten. Beim Betrieb der erfindungsgemäßen Anlage wird im Lagerraum ein festgelegter Druck eingehalten. Nach dem erstmaligen Aufbau des Drucks wird die der jeweils zugeführten Stickstoffmenge entsprechende Menge an Atmosphäre entsprechend aus dem Behälter 34 abgeführt, so dass ständig ein geringer Überdruck herrscht.

Der Einsatz einer Ansaugeinrichtung 1 erhöht die Effizienz der Anlage dadurch, dass aus der Atmosphäre im Behälter und der Umgebungsluft eine sauerstoffärmere Atmosphärenmischung gebildet wird. Diese wird verdichtet und in der Gastrennmembran 11 getrennt. Damit baut sich die angestrebte sauerstoffarme Atmosphäre im Behälter in kürzerer Zeit auf.

### Bezugszeichen

- 1: Ansaugeinrichtung
- 2: Antrieb
- 3: Kompressor
- 4: Wärmetauscher
- 5: Luftkühler
- 5a: alternativer Luftkühler
- 6: Kühlgebläse
- 7: Wasserabscheider
- 8: Druckluftfilter
- 9: Bypassventil
- 10: Entfeuchtungsmembrane
- 11: Gastrennmembrane
- 12: Druckspeicher
- 13: Stickstoffregelventil
- 14: Permeatventil
- 15: Befeuchtungsventil
- 16: Befeuchtungsventil
- 17: Stickstoffventil
- 18: Stickstoffbypassventil
- 21: Druckmesser
- 22: Sauerstoffmesser
- 23: Feuchte-/Temperaturmesser
- 24: Sauerstoffmesser
- 25: Feuchte-/Temperaturmesser
- 26: CO₂-Messer
- 27: Ethylenmesser
- 28: Druckmesser
- 29: Filter
- 31: CO₂-Behälte
- 32: Druckreduzierventil
- 33: Absperrventil
- 34: Lager- und Transportbehälter
- 35: Filter
- 36: Auslass
- 37: Einlass
- 38: Permeatauslass
- 39: Gasauslass
- 40: Abzweig
- 41: Steuerleitung
- 100: Anlagensteuerung

## Patentansprüche

1. Verfahren zur Erzeugung einer künstlichen Atmosphäre in einem Lager- oder Transportbehälter (34), bei dem von einem Luftverdichter (3) zugeführte Druckluft über eine Gastrennmembran (11) in den Lager- oder Transportbehälter (34) zur Erzeugung einer künstlichen Atmosphäre mit erhöhtem Stickstoffanteil überführt wird, wobei der Feuchtegehalt der zugeführten Druckluft mittels einer Entfeuchtungseinrichtung verringert wird, **dadurch gekennzeichnet, dass** die Druckluft vor ihrem Eintritt in die Gastrennmembran (11) mittels einer Entfeuchtungsmembran (10) entfeuchtet wird.

2. Verfahren nach Anspruch 1, **dadurch gekennzeichnet, dass** wenigstens ein Teil der in der Entfeuchtungsmembran (10) aus der Druckluft ausgeschiedenen Feuchte in den Lager- oder Transportbehälter (34) eingeführt wird.

3. Verfahren nach Anspruch 2, **dadurch gekennzeichnet, dass** die Feuchte dem die Gastrennmembran (11) verlassenden Gasstrom hinzugefügt wird.

4. Verfahren nach Anspruch 1, 2 oder 3, **dadurch gekennzeichnet, dass** wenigstens ein Teil der die Gastrennmembran verlassenden Gasstroms über die Rückspülstrecke der Entfeuchtungsmembran (10) geführt wird, bevor dieser Gasstromteil dem Lager- oder Transportbehälter (34) zugeführt wird.

5. Verfahren nach Anspruch 1, 2 oder 3, **dadurch gekennzeichnet, dass** wenigstens ein Teil des den Permeatauslass (38) der Gastrennmembran (11) verlassenden Permeats über die Rückspülstrecke der Entfeuchtungsmembran (10) geführt wird.

6. Verfahren nach Anspruch 4 und 5, **gekennzeichnet durch** zeitlich gesteuerten Wechsel der Arbeitsschritte nach Anspruch 4 und 5.

7. Verfahren nach einem oder mehreren der Ansprüche 1-6, **dadurch gekennzeichnet, dass** eine Kühlung der der Entfeuchtungsmembran (10) zugeführten Druckluft erfolgt.

8. Einrichtung zur Durchführung eines Verfahrens nach Anspruch 1 mit einem Luftverdichter (3), dessen Abluft einer Gastrennmembran (11) zur Abtrennung von Sauerstoff zugeführt wird, wobei der die Gastrennmembran verlassende im wesentlichen aus Stickstoff bestehende Gasstrom einem Lager- oder Transportbehälter (34) zugeführt wird, um darin eine künstliche Atmosphäre mit gegenüber der Umgebungsluft erhöhtem Stickstoffanteil herzustellen, **dadurch gekennzeichnet, dass** der Gastrennmembran (11) eine Entfeuchtungsmembran (10) vorgeschaltet ist, um die Druckluft vor ihrem Eintritt in die Gastrennmembran (11) zu entfeuchten.

9. Einrichtung nach Anspruch 8, **dadurch gekennzeichnet, dass** die Entfeuchtungsmembran (10) eine Rückspülstrecke aufweist, und dass wenigstens ein Teil des durch die Rückspülstrecke geführten Gasstroms mit darin aufgenommener Feuchte in den Transport- oder Lagerbehälter (34) überführbar ist.

10. Einrichtung nach Anspruch 8 oder 9, **dadurch gekennzeichnet, dass** der Permeatauslass (38) der Gastrennmembran (11) mit der Rückspülstrecke der Entfeuchtungsmembran (10) verbindbar ist, um das aus der Gastrennmembran (11) abgetrennte Permeat über die Rückspülstrecke der Entfeuchtungsmembran (10) an die Umgebung zu führen.

11. Einrichtung nach Anspruch 9, **dadurch gekennzeichnet, dass** der Auslass (39) der Gastrennmembran (11) einen Abzweig (40) zur Rückspülstrecke der Entfeuchtungsmembran (10) aufweist, und dass der Auslass (36) der Rückspülstrecke der Entfeuchtungsmembran (10) mit einem Einlass des Transport- oder Lagerbehälters (34) verbunden ist, um wenigstens einen Teil der die Gastrennmembran (11) verlassenden Gasstroms über die Rückspülstrecke der Entfeuchtungsmembran (10) zu befeuchten.

12. Einrichtung nach Anspruch 10 und 11, **dadurch gekennzeichnet, dass** der Rückspülstrecke der Entfeuchtungsmembran (10) Umschaltventile (15, 16) zugeordnet sind, um die Rückspülstrecke der Entfeuchtungsmembran (10) alternativ mit dem Permeatauslass (38) der Gastrennmembran (11) und der Umgebung oder dem Auslass (39) der Gastrennmembran (11) und einem Einlass des Transport- oder Lagerbehälters (34) zu verbinden.

13. Einrichtung nach Anspruch 11, **dadurch gekennzeichnet, dass** zwischen Einlass und Auslass der Rückspülstrecke der Entfeuchtungsmembran (10) ein Regelventil (13) geschaltet ist.

14. Einrichtung nach einem der Ansprüche 8-13, **dadurch gekennzeichnet, dass** ein Kühlaggregat (4 - 9) zur Kühlung der Druckluft zwischen Drucklufterzeuger (3) und Entfeuchtungsmembran (10) eingeschaltet ist.

## Claims

1. Method of generating an artificial atmosphere in a storage or transport container (34), in which compressed air which is fed in from an air compressor (3) is passed through a gas separating membrane (11) into the storage or transport container (34) to generate an artificial atmosphere with an increased proportion of nitrogen, the humidity content of the fed-in compressed air being reduced by means of a dehumidifying device, **characterized in that** before the compressed air enters the gas separating membrane (11), it is dehumidified by means of a dehumidifying membrane (10).

2. Method according to Claim 1, **characterized in that** at least a part of the humidity which is separated out of the compressed air in the dehumidifying membrane (10) is introduced into the storage or transport container (34).

3. Method according to Claim 2, **characterized in that** the humidity is added to the gas flow which leaves the gas separating membrane (11).

4. Method according to Claim 1, 2 or 3, **characterized in that** at least a part of the gas flow which leaves the gas separating membrane is guided via the backwash section of the dehumidifying membrane (10), before this part of the gas flow is fed to the storage or transport container (34).

5. Method according to Claim 1, 2 or 3, **characterized in that** at least a part of the permeate which leaves the permeate outlet (38) of the gas separating membrane (11) is guided via the backwash section of the dehumidifying membrane (10).

6. Method according to Claims 4 and 5, **characterized by** time-controlled alternation of the operations according to Claims 4 and 5.

7. Method according to one or more of Claims 1 to 6, **characterized in that** the compressed air which is fed to the dehumidifying membrane (10) is cooled.

8. Device to carry out a method according to Claim 1, with an air compressor (3), the outgoing air of which is fed to a gas separating membrane (11) to separate out oxygen, the gas flow which leaves the gas separating membrane, and consists essentially of nitrogen, being fed to a storage or transport container (34), to produce an artificial atmosphere in it, with an increased proportion of nitrogen compared with the ambient air, **characterized in that** a dehumidifying membrane (10) is connected upstream from the gas separating membrane (11), to dehumidify the compressed air before it enters the gas separating membrane (11).

9. Device according to Claim 8, **characterized in that** the dehumidifying membrane (10) has a backwash section, and that at least a part of the gas flow which is guided through the backwash section, with the humidity absorbed in it, can be passed into the storage or transport container (34).

10. Device according to Claim 8 or 9, **characterized in that** the permeate outlet (38) of the gas separating membrane (11) can be connected to the backwash section of the dehumidifying membrane (10), to guide the permeate which is separated out of the gas separating membrane (11) via the backwash section of the dehumidifying membrane (10) to the environment.

11. Device according to Claim 9, **characterized in that** the outlet (39) of the gas separating membrane (11) has a branch (40) to the backwash section of the dehumidifying membrane (10), and that the outlet (36) of the backwash section of the dehumidifying membrane (10) is connected to an inlet of the storage or transport container (34), to humidify at least a part of the gas flow leaving the gas separating membrane (11) via the backwash section of the dehumidifying membrane (10).

12. Device according to Claim 10 or 11, **characterized in that** changeover valves (15, 16) are associated with the backwash section of the dehumidifying membrane (10), to connect the backwash section of the dehumidifying membrane (10) alternately to the permeate outlet (38) of the gas separating membrane (11) and the environment, or to the outlet (39) of the gas separating membrane (11) and an inlet of the storage or transport container (34).

13. Device according to Claim 11, **characterized in that** between the inlet and outlet of the backwash section of the dehumidifying membrane (10), a control valve (13) is connected.

14. Device according to one of Claims 8 to 13, **characterized in that** a refrigeration unit (4 - 9) is connected between the compressed air generator (3) and the dehumidifying membrane (10), to refrigerate the compressed air.

## Revendications

1. Procédé pour produire une atmosphère artificielle dans un réservoir de stockage ou un conteneur (34), selon lequel de l'air comprimé amené par un compresseur d'air (3) est transféré par l'intermédiaire d'une membrane de séparation de gaz (11) dans le réservoir ou conteneur (34) afin de produire une atmosphère artificielle avec une proportion d'azote accrue, le degré d'humidité de l'air comprimé amené étant réduit grâce à un dispositif de déshumidification, **caractérisé en ce que** l'air comprimé est déshumidifié à l'aide d'une membrane de déshumidification (10) avant d'entrer dans la membrane de séparation de gaz (11).

2. Procédé selon la revendication 1, **caractérisé en ce qu'**une partie au moins de l'humidité extraite de l'air comprimé dans la membrane de déshumidification (10) est introduite dans le réservoir ou conteneur (34).

3. Procédé selon la revendication 2, **caractérisé en ce que** l'humidité est ajoutée au courant de gaz qui sort de la membrane de séparation de gaz (11).

4. Procédé selon la revendication 1, 2 ou 3, **caractérisé en ce qu'**une partie au moins du courant de gaz qui sort de la membrane de séparation de gaz passe par la zone de recirculation de la membrane de déshumidification (10) avant d'être amenée dans le réservoir de stockage ou le conteneur (34).

5. Procédé selon la revendication 1, 2 ou 3, **caractérisé en ce qu'**une partie au moins du perméat qui quitte la sortie de perméat (38) de la membrane de séparation de gaz (11) passe par la zone de recirculation de la membrane de déshumidification (10).

6. Procédé selon les revendications 4 et 5, **caractérisé par** une alternance commandée dans le temps des étapes selon les revendications 4 et 5.

7. Procédé selon l'une au moins des revendications 1 à 6, **caractérisé en ce qu'**un refroidissement de l'air comprimé amené sur la membrane de déshumidification (10) a lieu.

8. Dispositif pour la mise en oeuvre d'un procédé selon la revendication 1, comportant un compresseur d'air (3) dont l'air de sortie est amené sur une membrane de séparation de gaz (11) en vue de la séparation de l'azote, le courant de gaz qui sort de la membrane de séparation de gaz et qui se compose essentiellement d'azote étant amené dans un réservoir de stockage ou un conteneur (34) afin de produire dans celui-ci une atmosphère artificielle avec une proportion d'azote accrue par rapport à l'air ambiant, **caractérisé en ce qu'**une membrane de déshumidification (10) est installée en amont de la membrane de séparation de gaz (11), pour déshumidifier l'air comprimé avant son entrée dans la membrane de séparation de gaz (11).

9. Dispositif selon la revendication 8, **caractérisé en ce que** la membrane de déshumidification (10) comporte une zone de recirculation et **en ce qu'**une partie au moins du courant de gaz qui traverse cette zone est apte à être transférée dans le conteneur ou le réservoir (34) avec l'humidité absorbée dans cette zone.

10. Dispositif selon la revendication 8 ou 9, **caractérisé en ce que** la sortie de perméat (38) de la membrane de séparation de gaz (11) est apte à être reliée à la zone de recirculation de la membrane de déshumidification (10) afin d'amener le perméat séparé de ladite membrane de séparation de gaz (11) dans l'environnement par l'intermédiaire de la zone de recirculation de la membrane de déshumidification (10).

11. Dispositif selon la revendication 9, **caractérisé en ce que** la sortie (39) de la membrane de séparation de gaz (11) présente une dérivation (40) vers la zone de recirculation de la membrane de déshumidification (10) et **en ce que** la sortie (36) de ladite zone de recirculation de la membrane de déshumidification (10) est reliée à une entrée du conteneur ou réservoir de stockage (34) afin d'humidifier par l'intermédiaire de ladite zone de recirculation une partie au moins du courant de gaz qui quitte la membrane de séparation de gaz (11).

12. Dispositif selon les revendications 10 et 11, **caractérisé en ce que** des soupapes de manoeuvre (15, 16) sont associées à la zone de recirculation de la membrane de déshumidification (10) afin de relier alternativement la zone de recirculation de la membrane de déshumidification (10) à la sortie de perméat (38) de la membrane de séparation de gaz (11) et à l'environnement ou à la sortie (39) de ladite membrane de séparation de gaz (11) et à une entrée du conteneur ou réservoir de stockage (34).

13. Dispositif selon la revendication 11, **caractérisé en ce qu'**une soupape de régulation (13) est montée entre l'entrée et la sortie de la zone de recirculation de la membrane de déshumidification (10).

14. Dispositif selon l'une des revendications 8 à 13, **caractérisé en ce qu'**un groupe de refroidissement (4-9) est monté entre le générateur d'air comprimé (3) et la membrane de déshumidification (10) pour refroidir l'air comprimé.
